# EUROPÄISCHE PATENTSCHRIFT

(11) **EP 2 689 634 B1**
(45) Veröffentlichungstag und Bekanntmachung des Hinweises auf die Patenterteilung: **20.05.2015**
(21) Anmeldenummer: 12709701.2
(22) Anmeldetag: 29.02.2012
(51) Int. Cl.: H05B 6/04

(54) **VERFAHREN ZUM EINSTELLEN EINES EINSCHALTSTROMS EINES HAUSGERÄTS SOWIE HAUSGERÄT, INSBESONDERE KOCHFELD, MIT EINER STEUEREINHEIT ZUM DURCHFÜHREN DES VERFAHRENS**
METHOD FOR ADJUSTING AN INRUSH CURRENT OF A DOMESTIC APPLIANCE, AND DOMESTIC APPLIANCE, IN PARTICULAR COOKING RANGE, COMPRISING A CONTROL UNIT FOR CARRYING OUT THE METHOD
PROCÉDÉ POUR RÉGLER UN COURANT DE MISE EN MARCHE D'UN APPAREIL MÉNAGER AINSI QU'UN APPAREIL MÉNAGER, EN PARTICULIER UNE PLAQUE DE CUISSON, COMPRENANT UNE UNITÉ DE COMMANDE POUR METTRE EN OEUVRE LE PROCÉDÉ

(30) Priorität: 23.03.2011 ES 201130416
(43) Veröffentlichungstag der Anmeldung: 29.01.2014
(73) Patentinhaber: BSH Hausgeräte GmbH, 81739 München (DE)
(72) Erfinder: ANTON FALCON, Daniel, E-50010 Zaragoza (ES); DE LA CUERDA ORTIN, Jose Maria, E-50018 Zaragoza (ES); GARDE ARANDA, Ignacio, E-50012 Zaragoza (ES); HERNANDEZ BLASCO, Pablo Jesus, E-50410 Cuarte de Huerva (Zaragoza) (ES); LLORENTE GIL, Sergio, E-50009 Zaragoza (ES); MAIRAL SERRANO, Carlos Vicente, E-50015 Zaragoza (ES); MURESAN, Paul, E-50720 La Cartuja (ES); PUYAL PUENTE, Diego, E-50014 Zaragoza (ES)
(86) Internationale Anmeldenummer: PCT/IB2012/050947
(87) Internationale Veröffentlichungsnummer: WO 2012/127343

(56) Entgegenhaltungen:
- CN-A- 1 961 476
- CN-A- 101 082 439
- CN-C- 100 593 279
- US-A1- 2003 215 255

## Beschreibung

Die Erfindung betrifft ein Verfahren zum Einstellen eines Einschaltstroms eines Hausgeräts auf einen regionspezifischen Einschaltstrom. Des Weiteren betrifft die Erfindung ein Hausgerät, insbesondere ein Kochfeld, mit einer Steuereinheit zum Durchführen des Verfahrens.

Es ist bekannt, dass in unterschiedlichen Ländern unterschiedliche Einschaltströme zur Energieversorgung von Hausgeräten bereitgestellt werden. So ist es beispielsweise bekannt, dass in Europa eine Vielzahl von Einschaltströmen in unterschiedlichen Ländern vorgegeben sind. So ist es beispielsweise in Spanien, Frankreich und Großbritannien bekannt, dass die Einschaltströme auf 25 A bzw. 32 A bzw. 13 A pro Phase begrenzt sind. In Deutschland hingegen ist ein dreiphasiger Einschaltstrom vorgegeben, der auf 16 A pro Phase begrenzt ist. Hausgeräte müssen daher auf die individuelle Einschaltstromversorgung angepasst werden. In diesem Zusammenhang ist gegenwärtig vorgesehen, dass für jedes Land eine individuelle Ausgestaltung eines Hausgeräts hergestellt werden muss, um den spezifischen Anforderungen betreffend den Einschaltstrom gerecht werden zu können. Dies ist sehr aufwändig bei der Entwicklung und daher auch sehr kostenintensiv.

Aus der DE 103 01 526 B3 ist ein Gargerät mit einem satellitengestützen Ortungssystem bekannt. Über dieses satellietengestützte Ortungssystem kann sich das Gargerät auf ortsübliche Strom- und Gasversorgungen einstellen oder zumindest warnen, dass eine entsprechende Einstellung nötig ist. Die örtliche Stromversorgung ist jedoch nur dann möglich, wenn das Gargerät eine Pufferbatterie aufweist. Dies, da bei dem Gargerät gemäß dem Stand der Technik eine solche Erkennung bereits vor dem Anschluss an das Stromnetz erfolgen muss.

Es ist Aufgabe der vorliegenden Erfindung, ein Verfahren sowie ein Hausgerät zu schaffen, bei welchem bzw. mit welchem die Bereitstellung von verschiedenen Gerätevarianten für unterschiedliche regionalspezifische Anforderungen im Hinblick auf die Energieversorgung vermieden werden kann.

Diese Aufgabe wird durch ein Verfahren, welches die Merkmale nach Anspruch 1 aufweist, und ein Hausgerät, welches die Merkmale nach Anspruch 11 aufweist, gelöst.

Bei einem erfindungsgemäßen Verfahren zum Einstellen eines Einschaltstroms eines Hausgeräts auf einen regionspezifischen Einschaltstrom wird das Hausgerät zum Durchführen des Einstellen des Einschaltstroms in einen Einstellmodus gebracht. In diesem Einstellmodus wird der Einschaltstrom auf den gewünschten regionspezifischen Einschaltstrom eingestellt bzw. begrenzt.

Es wird daher für ein Hausgerät ein Verfahren bereitgestellt, welches es ermöglicht, dass dieses eine Gerät auf unterschiedliche regionspezifische Einschaltströme eingestellt werden kann.

Durch das Verfahren wird also eine Möglichkeit bereitgestellt, bei der aus mehreren auswählbaren regionspezifischen Einschaltströmen, die am Hausgerät selbst ausgewählt werden können, der benötigte und gewünschte regionspezifische Einschaltstrom ausgewählt und eingestellt werden kann. Es wird also erreicht, dass ein Hausgerät die Funktion aufweist, dass aus mehreren möglichen regionspezifischen Einschaltströmen einer ausgewählt wird und nicht mehr mehrere separate Hausgeräte entwickelt werden müssen, die dann lediglich jeweils nur einen regionspezifischen Einschaltstrom aufweisen und darauf konzipiert sind und dieser Einschaltstrom nicht mehr geändert werden kann.

Durch ein derartiges erfindungsgemäßes Verfahren kann die Anzahl an unterschiedlich zu entwickelnden Hausgeräten eines Hausgerätetyps deutlich verringert werden. Es müssen somit auch keine separaten länderspezifischen Varianten eines Hausgerätstyps gebildet werden.

Vorzugsweise ist vorgesehen, dass zumindest eine Funktionseinheit des Hausgeräts mehrere Betriebsstufen aufweist und im Einstellmodus jeder Betriebsstufe ein regionspezifischer Einschaltstrom zugeordnet wird. Es kann also auf sehr einfache und leicht nachvollziehbare Weise die Einstellung des Einschaltstroms durchgeführt werden.

Vorzugsweise wird vorgesehen, dass zur Auswahl des regionspezifischen Einschaltstroms die zugeordnete Betriebsstufe innerhalb eines vorgegebenen Zeitintervalls nach dem Einstellen des Einstellmodus eingestellt wird. Durch die Vorgabe eines derartigen Zeitfensters kann einerseits die Einstellung relativ zügig durchgeführt werden, andererseits kann man somit das Vorgehen während des Einstellmodus von anderen Betriebsweisen, beispielsweise beim gewünschten Durchführen eines tatsächlichen Betriebsablaufs des Hausgeräts, eindeutig unterschieden werden. Dadurch können unerwünschte Fehleinstellungen vermieden werden. Auch sicherheitskritischen Situationen bezüglich von unerwünschten Einstellungen kann dadurch entgegengewirkt werden.

Vorzugsweise wird vorgesehen, dass der eingestellte Einschaltstrom optisch angezeigt wird und durch Ausschalten des Hausgeräts der ausgewählte regionspezifische Einschaltstrom gespeichert wird. Durch eine derartige Vorgehensweise kann dem Nutzer sehr zuverlässig und sicher die erfolgte Einstellung mitgeteilt werden. Auch dadurch kann das Auftreten von Fehleinstellungen vermieden werden. In vorteilhafter Weise wird dann auch automatisch durch das Ausschalten des Hausgeräts der eingestellte und ausgewählte Einschaltstrom gespeichert. Auch dadurch kann die Sicherheit erhöht werden. Denn im Vergleich zu einer nutzerdefinierten Abspeicherung ist durch diesen Automatismus auf alle Fälle gewährleistet, dass der eingestellte Einschaltstrom auch zukünftig, insbesondere bis zu einem nächsten Durchführen eines Einstellmodus, bestehen bleibt.

Vorzugsweise wird vorgesehen, dass der Einschaltstrom eines als Hausgerät ausgebildeten Kochfelds eingestellt wird und zum Aktivieren des Einstellmodus das Kochfeld eingeschaltet wird. Der Einstellmodus läuft darüber hinaus auch nur dann ab, wenn die zumindest zwei als Funktionseinheiten ausgebildeten Kochzonen des Kochfelds unbelegt sind. Dies bedeutet, dass der Einstellmodus und das weitere Vorgehen nur dann ablaufen, wenn die Kochzonen nicht mit Kochtöpfen oder anderen Zubereitungsgefäßen belegt sind. Auch dadurch sind entsprechende Sicherheitsvorkehrungen getroffen, um den Ablauf nicht irrtümlicherweise während eines Zubereitungsvorgangs unerwünscht auszulösen.

Vorzugsweise wird vorgesehen, dass innerhalb eines Zeitintervalls nach dem Einschalten des Kochfelds, insbesondere innerhalb einer Minute, alle Kochzonen auf eine als Betriebsstufe vorgesehene Kochstufe eingestellt werden, welcher im Einstellmodus der gewünschte regionspezifische Einschaltstrom zugeordnet ist.

Vorzugsweise wird vorgesehen, dass einer ersten Kochstufe einer Kochzone ein Einschaltstrom von 20 A, einer zweiten Kochstufe ein Einschaltstrom von 16 A, einer dritten Kochstufe ein Einschaltstrom von 13 A und einer vierten Kochstufe ein Einschaltstrom von 10 A zugeordnet wird. Dies bedeutet beispielsweise, dass dann, wenn das Kochfeld beispielsweise im Energieversorgungsnetz von Deutschland betrieben und angeschlossen werden soll, dann im Einstellmodus die Kochstufe zwei für alle Kochzonen ausgewählt wird und somit der zugeordnete regionspezifische Einschaltstrom von 16 A ausgewählt und eingestellt wird.

Diese Einstellung des maximal möglichen Einschaltstroms gewährleistet dann auch, dass der sichere und zuverlässige Betrieb bezüglich der Energieversorgung in dieser spezifischen Region beziehungsweise dem Land gewährleistet ist.

Bezüglich der weiteren Vorgehensweise im Einstellmodus wird dann vorgesehen, dass nach dem Einstellen des Einschaltstroms für die Kochzonen jede Kochzone ausgeschaltet wird. Auch dadurch wird ein ganz spezifischer Ablauf vorgesehen, um zu vermeiden, dass Fehleinstellungen durchgeführt werden oder durch die Störung fälschlich interpretiert werden würde, dass während eines anderweitigen Betriebsprogrammablaufs ein derartiges Einstellen des Einschaltstroms durchgeführt wird.

Besonders vorteilhaft ist es dabei, dass das Ausschalten der Kochzonen in einer vorgegebenen Reihenfolge durchgeführt wird. Insbesondere erfolgt das Ausschalten der Kochzonen entgegen dem Uhrzeigersinn. Es wird insbesondere vorgesehen, dass das Ausschalten der Kochzonen beginnend mit der rechts unten angeordneten Kochzone erfolgt, wenn das Kochfeld beispielsweise zumindest vier separate Kochzonen aufweist, die in einer Matrix angeordnet sind.

Vorzugsweise wird vorgesehen, dass der eingestellte Einschaltstrom des Kochfelds optisch angezeigt wird. Besonders vorteilhaft ist es dabei, dass eine blinkende Anzeige im Bereich vorzugsweise von einer oder mehreren Kochzonenflächen erfolgt. Die Wahrnehmbarkeit für den Nutzer ist dabei besonders begünstigt.

Vorzugsweise wird vorgesehen, dass das Kochfeld nach dem Einstellen des regionspezifischen Einschaltstroms ausgeschaltet wird und dadurch der eingestellte Einschaltstrom abgespeichert wird. Auch hier kann somit ein Ablaufautomatismus geschaffen werden, der auch sicherstellt, dass die gewünschte Einstellung übernommen und dauerhaft bestehen bleibt. Vorzugsweise wird vorgesehen, dass der Einstellmodus durch das durch das Ausschalten des Kochfelds bewirkten Abspeicherns des eingestellten Einschaltstroms beendet wird. Auch hier wird somit ein Automatismus geschaffen, sodass mögliche nachfolgende Zubereitungsvorgänge nicht beeinträchtigt und uneingeschränkt durchgeführt werden können.

Das Beenden des Einstellmodus erfolgt somit insbesondere dann, wenn das gesamte Kochfeld mit dem Hauptschalter ausgeschaltet wird.

Die Erfindung betrifft darüber hinaus auch ein Hausgerät, insbesondere ein Kochfeld, mit einer Steuereinheit zum Durchführen eines erfindungsgemäßen Verfahrens oder einer vorteilhaften Ausgestaltung davon.

Ein Ausführungsbeispiel der Erfindung wird nachfolgend anhand schematischer Zeichnungen näher erläutert. Es zeigen:
- Fig. 1: eine perspektivische Darstellung eines Ausführungsbeispiels eines erfindungsgemäßen Kochfelds;
- Fig. 2: eine Draufsicht auf das Kochfeld während einer ersten Einstellphase im Einstellmodus;
- Fig. 3: eine Draufsicht auf das Kochfeld in einer zweiten Phase im Einstellmodus;
- Fig. 4: eine Draufsicht auf das Kochfeld in einer dritten Phase des Einstellmodus; und
- Fig. 5: eine Draufsicht auf das Kochfeld in einer vierten Phase des Einstellmodus.

In den Figuren werden gleiche oder funktionsgleiche Elemente mit den gleichen Bezugszeichen versehen.

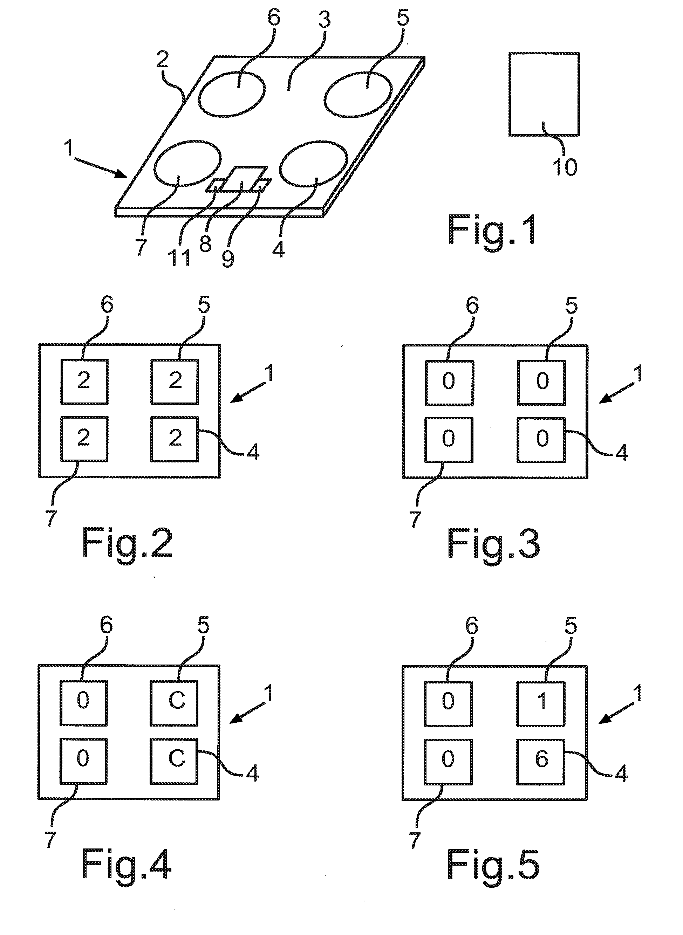

In Fig. 1 ist in einer perspektivischen Darstellung ein als Induktionskochfeld ausgebildetes Kochfeld 1 gezeigt. Es umfasst eine Kochfeldplatte 2, die beispielsweise aus Glas oder Glaskeramik ausgebildet sein kann. Auf der Kochfeldplatte 2 sind im Ausführungsbeispiel auf einer Oberseite 3 Kochzonen 4, 5, 6 und 7 ausgebildet. Auf diesen können zum Zubereiten von Lebensmitteln Zubereitungsgefäße aufgestellt werden.

Darüber hinaus umfasst das Kochfeld 1 eine Bedienvorrichtung 8. Diese ist im Ausführungsbeispiel in das Kochfeld 1 integriert und kann durch Berühren der Oberseite der Kochfeldplatte 2 bedient werden. Die Bedienvorrichtung 8 ist zumindest teilweise mit berührsensitiven Bedienelementen ausgebildet. Das Kochfeld 1 umfasst darüber hinaus eine Steuereinheit 9, welche der Bedienvorrichtung 8 vorzugsweise zugeordnet ist.

Das Kochfeld 1 ist dahingehend konzipiert, dass es an unterschiedliche Einschaltströme in unterschiedlichen Ländern anschließbar ist. Dazu kann der maximale Einschaltstrom regionspezifisch eingestellt werden. Dies bedeutet, dass das Kochfeld 1 problemlos in unterschiedlichen Ländern, in denen unterschiedliche maximale Einschaltströme vorgegeben sind, betrieben werden kann.

Wird das Kochfeld 1 beispielsweise an einem Energieversorgungsnetz 10 angeschlossen, welches einen maximalen Einschaltstrom von 16 A zulässt, so kann das Kochfeld 1 entsprechend darauf eingestellt werden.

Dazu ist vorgesehen, dass in einem spezifischen Einstellmodus diese Einstellung durchgeführt wird. Dazu wird zunächst das Kochfeld 1 durch Betätigen eines Hauptschalters 11 eingeschaltet. Darüber hinaus ist es vorgesehen, dass zur Durchführung des Einstellmodus die Kochzonen 4 bis 7 zubereitungsgefäßfrei sind. Dies bedeutet, dass dann auf diesen Kochzonen 4 bis 7 kein Zubereitungsgefäß aufgestellt ist und somit die Kochzonen 4 bis 7 unbelegt sind.

Es wird dann in diesem Einstellmodus des Weiteren erforderlich, dass innerhalb einer vorgegebenen Zeitspanne, insbesondere innerhalb von 60 Sekunden, alle Kochzonen 4 bis 7 auf den gewünschten regionspezifischen Einschaltstrom eingestellt werden. Es ist dabei vorgesehen, dass in dem Einstellmodus einstellbare Kochstufen der Kochzonen 4 bis 7 mit spezifischen Einschaltströmen belegt sind und daher durch Auswahl einer Kochstufe auch der gewünschte regionspezifische Einschaltstrom ausgewählt werden kann.

Im Ausführungsbeispiel ist vorgesehen, dass bei einem Kochfeld 1 die Kochzonen 4 bis 7 jeweils zumindest vier Kochstufen aufweisen. Dabei ist der ersten Kochstufe ein Einschaltstrom von 20 A, der zweiten Kochstufe ein Einschaltstrom von 16 A, der dritten Kochstufe ein Einschaltstrom von 13 A und der vierten Kochstufe ein Einschaltstrom von 10 A zugeordnet. Dies ist in der Elektronik des Kochfelds 1 entsprechend abgelegt und vorgegeben.

Wird nun innerhalb des oben genannten Zeitintervalls bei allen vier Kochzonen 4 bis 7 die Kochstufe zwei ausgewählt, so ist für alle Kochzonen 4 bis 7 dieser regionspezifische Einschaltstrom von 16 A ausgewählt. Gemäß der Darstellung in Fig. 2 wird dies auch optisch angezeigt. Es kann dabei vorgesehen sein, dass die Kochstufenziffern "2" jeweils im Bereich der Kochzonenflächen der Kochzonen 4 bis 7 optisch angezeigt werden. Es kann jedoch auch vorgesehen sein, dass im Bereich der Bedienvorrichtung 8 symbolhaft die Kochzonen 4 bis 7 auch im Hinblick auf ihre matrixartige Anordnung dargestellt sind und dort optische Anzeigen vorhanden sind, die dann jeweils die in Fig. 2 gezeigten Kochstufenauswahlen darstellen.

Im Nachfolgenden wird dann in dem Einstellmodus ein Ausschalten der Kochzonen 4 bis 7 durchgeführt. Dies erfolgt in einer ganz spezifischen Reihenfolge. Im Ausführungsbeispiel ist dabei vorgesehen, dass zunächst die Kochzone 4, dann die Kochzone 5, dann die Kochzone 6 und zuletzt die Kochzone 7 ausgeschaltet werden. Dazu ist in Fig. 3 die Situation gezeigt, bei der alle Kochzonen 4 bis 7 bereits ausgeschaltet sind. Dabei wird durch die Ziffer "0" der ausgeschaltete Zustand kenntlich gemacht und optisch angezeigt.

Im Weiteren erfolgt dann gemäß den Darstellungen in Fig. 4 und Fig. 5 eine optische Anzeige des Werts des ausgewählten und eingestellten regionspezifischen Einschaltstroms, wobei beispielsweise auch ein alternierendes Blinken in den beiden rechten Kochzonenflächen der Kochzonen 4 und 5 oder alternativ in dem Anzeigebereich der Bedienvorrichtung 8 erfolgt, und zunächst der Buchstabe "C" für Strom (current) angezeigt wird und dann auf den Wert 16, wie es in Fig. 5 gezeigt ist, gewechselt wird.

Ist der ausgewählte regionspezifische Einschaltstrom korrekt, so kann der Nutzer durch Betätigen des Hauptschalters 11 das gesamte Kochfeld 1 ausschalten. Es wird dann über die Steuereinheit 9 automatisch gesteuert der eingestellte Einschaltstrom abgespeichert und bleibt insbesondere solang eingestellt, bis eine Veränderung in einem Einstellmodus durchgeführt wird. Das Kochfeld 1 kann somit sehr einfach und aufwandsarm an unterschiedliche regionspezifische Einschaltströme angepasst werden. So kann im Weiteren auch ermöglicht werden, dass ausgehend von dem erläuterten Einstellungsszenario zum Betrieb des Kochfelds 1 in einer anderen Region dann wiederum der Einstellstellmodus aktiviert wird und beispielsweise durch Einstellen der Kochstufe 1 der regionspezifische Einschaltstrom von 20 A ausgewählt und eingestellt wird.

### Bezugszeichenliste

- 1: Kochfeld
- 2: Kochfeldplatte
- 4, 5, 6, 7: Kochzonen
- 8: Bedienvorrichtung
- 9: Steuereinheit
- 10: Energieversorgungsnetz
- 11: Hauptschalter

## Patentansprüche

1. Verfahren zum Einstellen eines Einschaltstroms eines Hausgeräts (1) auf einen regionspezifischen Einschaltstrom, bei welchem das Hausgerät (1) in einen Einstellmodus gebracht wird, in dem der Einschaltstrom auf einen von mehreren am Hausgerät (1) auswählbaren regionspezifischen Einschaltströmen am Hausgerät (1) begrenzt wird.

2. Verfahren nach Anspruch 1, bei welchem zumindest eine Funktionseinheit (4 bis 7) des Hausgeräts (1) mehrere Betriebsstufen aufweist und im Einstellmodus jeder Betriebsstufe ein regionspezifischer Einschaltstrom zugeordnet wird.

3. Verfahren nach Anspruch 2, bei welchem zur Auswahl des regionspezifischen Einschaltstroms die zugeordnete Betriebsstufe innerhalb eines vorgegebenen Zeitintervalls nach dem Einstellen des Einstellmodus eingestellt wird.

4. Verfahren nach Anspruch 3, bei welchem der eingestellte Einschaltstrom optisch angezeigt wird und durch Ausschalten des Hausgeräts (1) der ausgewählte regionspezifische Einschaltstrom gespeichert wird.

5. Verfahren nach einem der vorhergehenden Ansprüche, bei welchem der Einschaltstrom eines als Hausgerät ausgebildeten Kochfelds (1) eingestellt wird und zum Aktivieren des Einstellmodus das Kochfeld (1) eingeschaltet wird und die zumindest zwei als Funktionseinheiten ausgebildeten Kochzonen (4 bis 7) unbelegt sind.

6. Verfahren nach Anspruch 5, bei welchem innerhalb eines Zeitintervalls nach dem Einschalten des Kochfelds (1), insbesondere innerhalb einer Minute, alle Kochzonen (4 bis 7) auf eine als Betriebsstufe vorgesehene Kochstufe eingestellt werden, welcher im Einstellmodus der gewünschte regionspezifische Einschaltstrom zugeordnet ist.

7. Verfahren nach Anspruch 6, bei welchem nach dem Einstellen des Einschaltstrom für die Kochzonen (4 bis 7) jede Kochzone (4 bis 7) ausgeschaltet wird.

8. Verfahren nach Anspruch 7, bei welchem das Ausschalten der Kochzonen (4 bis 7) in einer vorgegebenen Reihenfolge durchgeführt wird, insbesondere das Ausschalten in der Reihenfolge entgegen dem Uhrzeigersinn erfolgt.

9. Verfahren nach Anspruch 7 oder 8, bei welchem der eingestellte Einschaltstrom optisch angezeigt wird, insbesondere im Bereich der Kochzonenflächen und/oder im Bereich einer Bedienvorrichtung (8) des Kochfelds (1), angezeigt wird.

10. Verfahren nach einem der Ansprüche 7 bis 9, bei welchem das Kochfeld (1) nach dem Einstellen des regionspezifischen Einschaltstroms ausgeschaltet wird und dadurch der eingestellte Einschaltstroms abgespeichert wird, insbesondere der Einstellmodus durch das durch das Ausschalten des Kochfelds (1) bewirkten Abspeicherns des eingestellten Einschaltstroms beendet wird.

11. Hausgerät, insbesondere Kochfeld (1), mit einer Steuereinheit (9) zum Durchführen eines Verfahrens nach einem der vorhergehenden Ansprüche.

## Claims

1. Method for setting an inrush current of a domestic appliance (1) to a region-specific inrush current, in which the domestic appliance (1) is switched to a setting mode, in which the inrush current is limited at the domestic appliance (1) to one of a number of region-specific inrush currents that can be selected at the domestic appliance (1).

2. Method according to claim 1, in which at least one function unit (4 to 7) of the domestic appliance (1) has a number of operating stages and a region-specific inrush current is assigned to each operating stage in setting mode.

3. Method according to claim 2, in which the assigned operating stage is set within a predetermined time interval after setting the setting mode to select the region-specific inrush current.

4. Method according to claim 3, in which the set inrush current is displayed visually and the selected region-specific inrush current is stored by switching off the domestic appliance (1).

5. Method according to one of the preceding claims, in which the inrush current of a hob (1) configured as the domestic appliance is set and the hob (1) is switched on to activate setting mode and the at least two cooking zones (4 to 7), which are configured as function units, are unoccupied.

6. Method according to claim 5, in which all the cooking zones (4 to 7) are set to a cooking stage provided as the operating stage, to which the desired region-specific inrush current is assigned in setting mode, within a time interval after the hob (1) has been switched on, in particular within one minute.

7. Method according to claim 6, in which each cooking zone (4 to 7) is switched off after the inrush current has been set for the cooking zones (4 to 7).

8. Method according to claim 7, in which the switching off of the cooking zones (4 to 7) is performed in a predetermined sequence, in particular switching off takes place in an anticlockwise sequence.

9. Method according to claim 7 or 8, in which the set inrush current is displayed visually, in particular in the region of the cooking zone surfaces and/or in the region of an operating apparatus (8) of the hob (1).

10. Method according to one of claims 7 to 9, in which the hob (1) is switched off after the region-specific inrush current has been set, thereby storing the set inrush current, in particular the setting mode is terminated by the storing of the set inrush current as brought about by the switching off of the hob (1).

11. Domestic appliance, in particular a hob (1), having a control unit (9) for carrying out a method according to one of the preceding claims.

## Revendications

1. Procédé de réglage d'un courant de mise en marche d'un appareil ménager (1) sur un courant de mise en marche spécifique à une région, dans lequel procédé l'appareil ménager (1) est mis dans un mode de réglage, dans lequel le courant de mise en marche est limité sur l'appareil ménager (1) à un courant de mise en marche, parmi plusieurs courants spécifiques à une région, sélectionnables sur l'appareil ménager (1)

2. Procédé selon la revendication 1, dans lequel au moins une unité fonctionnelle (4 à 7) de l'appareil ménager (1) présente plusieurs échelons de fonctionnement et dans lequel, en mode de réglage, un courant de mise en marche spécifique à une région est attribué à chaque échelon de fonctionnement.

3. Procédé selon la revendication 2, dans lequel pour la sélection du courant de mise en marche spécifique à la région, l'échelon de fonctionnement attribué est réglé pendant un intervalle de temps prédéfini après le réglage du mode de réglage.

4. Procédé selon la revendication 3, dans lequel le courant de mise en marche réglé est affiché optiquement et dans lequel le courant de mise en marche spécifique à la région sélectionné est mémorisé en éteignant l'appareil ménager (1).

5. Procédé selon l'une quelconque des revendications précédentes, dans lequel le courant de mise en marche d'une table de cuisson (1) réalisée comme appareil ménager est réglé et dans lequel, pour activer le mode de réglage, la table de cuisson (1) est mise en marche et les au moins deux zones de cuisson (4 à 7) réalisées comme unités fonctionnelles ne sont pas affectées.

6. Procédé selon la revendication 5, dans lequel, pendant un intervalle de temps après la mise en marche de la table de cuisson (1), notamment pendant une minute, toutes les zones de cuisson (4 à 7) sont réglées sur un échelon de cuisson ménagé comme échelon de fonctionnement, auquel, en mode de réglage, est attribué le courant de mise en marche spécifique à la région et souhaité.

7. Procédé selon la revendication 6, dans lequel après le réglage du courant de mise en marche pour les zones de cuisson (4 à 7), chaque zone de cuisson (4 à 7) est éteinte.

8. Procédé selon la revendication 7, dans lequel l'arrêt des zones de cuisson (4 à 7) est réalisé dans un ordre prédéfini, notamment dans lequel l'arrêt a lieu dans l'ordre contraire au sens horaire.

9. Procédé selon la revendication 7 ou 8, dans lequel le courant de mise en marche réglé est affiché optiquement, notamment dans la partie des surfaces des zones de cuisson et/ou dans la partie d'un dispositif de commande (8) de la table de cuisson (1).

10. Procédé selon l'une quelconque des revendications 7 à 9, dans lequel la table de cuisson (1) est éteinte après le réglage du courant de mise en marche spécifique à la région et dans lequel le courant de mise en marche réglé est ainsi mémorisé, dans lequel notamment le mode de réglage est terminé en raison de la mémorisation, due à l'arrêt de la table de cuisson (1), du courant de mise en marche réglé.

11. Appareil ménager, notamment table de cuisson (1), comprenant une unité de commande (9) destinée à réaliser un procédé selon l'une quelconque des revendications précédentes.
